(19) Europäisches Patentamt / European Patent Office / Office européen des brevets

(11) **EP 4 364 829 A1**

(12) **EUROPEAN PATENT APPLICATION**
published in accordance with Art. 153(4) EPC

(43) Date of publication:
**08.05.2024 Bulletin 2024/19**

(21) Application number: **22832743.3**

(22) Date of filing: **08.06.2022**

(51) International Patent Classification (IPC):
**B01D 61/02** (2006.01)        **B01D 61/12** (2006.01)
**B01D 61/58** (2006.01)        **B01D 69/02** (2006.01)

(52) Cooperative Patent Classification (CPC):
**B01D 61/02; B01D 61/12; B01D 61/58;**
**B01D 69/02;** Y02A 20/131

(86) International application number:
**PCT/JP2022/023031**

(87) International publication number:
**WO 2023/276586 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2021 JP 2021108090**

(71) Applicant: **Sumitomo Chemical Company Limited Tokyo 103-6020 (JP)**

(72) Inventors:
• **NAKASUJI, Takehiro**
  **Niihama-shi, Ehime 792-8521 (JP)**
• **YOKOKAWA, Naoki**
  **Ichihara-shi, Chiba 299-0195 (JP)**
• **KINOSHITA, Masahiro**
  **Ichihara-shi, Chiba 299-0195 (JP)**
• **NAKAO, Shinichi**
  **Tokyo 178-0063 (JP)**

(74) Representative: **Plasseraud IP**
  **66, rue de la Chaussée d'Antin**
  **75440 Paris Cedex 09 (FR)**

(54) **MEMBRANE SEPARATION METHOD, AND METHOD FOR MANUFACTURING LOOSE RO MEMBRANE**

(57)    Provided is a membrane separation method to which a reverse osmosis method can be applied as a method for separating or concentrating a to-be-treated liquid having a high osmotic pressure or as a water recovery method. The membrane separation method for a to-be-treated liquid having an osmotic pressure according to the present invention includes a first step of separating the to-be-treated liquid into a first permeate and a first retentate by a reverse osmosis method using a loose RO membrane (50). The to-be-treated liquid satisfies $\pi_{Cb'} > \Delta Pmax$ when an osmotic pressure of a to-be-treated liquid side membrane surface concentration Cb' is represented by $\pi_{Cb'}$ and a maximum operating pressure difference is represented by $\Delta Pmax$, or has an osmotic pressure of 5 MPa or more and 100 MPa or less. The loose RO membrane (50) is a membrane through which at least a part of a solute contained in the to-be-treated liquid passes together with a solvent.

【FIG. 1】

FIG. 1

TO-BE-TREATED LIQUID
11
SECOND RETENTATE
22
FIRST RETENTATE (SALT CONCENTRATE)
13
FIRST PERMEATE
12
SECOND PERMEATE (RECOVERED LIQUID)
21
50  10        60  20
1

EP 4 364 829 A1

**Description**

TECHNICAL FIELD

The present invention relates to a membrane separation method and a method for manufacturing a loose RO membrane.

BACKGROUND ART

A reverse osmosis (RO) method is a technique of allowing a solvent to selectively pass through a semipermeable membrane by applying pressure to a concentrated solution side partitioned by the semipermeable membrane to make an operating pressure difference between a to-be-treated liquid side and a permeation side higher than a difference in osmotic pressure between the concentrated solution side and a dilute solution side. This technique is widely used in an application such as seawater desalination. Furthermore, the reverse osmosis method may be classified into RO and nanofiltration (NF). The reverse osmosis method is known to be an energy saving technique as compared with an evaporation method for evaporating and concentrating water using thermal energy.

However, there is an upper limit to an operational operating pressure difference due to pressure resistance of an element used in the reverse osmosis method, and therefore the concentration of a solution to which the reverse osmosis method can be applied is limited. Furthermore, in the reverse osmosis method, a substantial increase in osmotic pressure due to an increase in solute concentration on a membrane surface due to concentration polarization caused by separation and an increase in solute concentration in a to-be-treated liquid due to solvent permeation is also a limitation on the application range of the reverse osmosis method. Therefore, an operation such as concentration of a high-concentration liquid or high concentration of a low-concentration liquid is still often performed by an evaporation method.

Patent Document 1 describes a salt water desalination method using a reverse osmosis method. The desalination method described in Patent Document 1 uses a semipermeable membrane module including a first chamber and a second chamber partitioned by a semipermeable membrane. Patent Document 1 discloses a method for causing a part of salt water to flow into the first chamber, causing another part of the salt water to flow into the second chamber, and pressurizing the first chamber to increase a concentration of the salt water on a permeation side, thereby reducing an osmotic pressure difference.

PRIOR ART DOCUMENT

PATENT DOCUMENT

Patent Document 1: JP-A-2018-1111

SUMMARY OF THE INVENTION

PROBLEMS TO BE SOLVED BY THE INVENTION

However, a salt in the salt water introduced into the second chamber diffuses toward a membrane surface on the permeation side with a concentration distribution as a driving force, but is pushed back in a direction opposite to the diffusion by a flow of a solvent permeating from the membrane surface. Therefore, in the above-described conventional technique, it may be difficult to sufficiently increase a membrane surface concentration on the permeation side, the concentration substantially contributing to osmotic pressure.

An object of one aspect of the present invention is to provide a membrane separation method to which a reverse osmosis method can be applied as a method for separating or concentrating a to-be-treated liquid having a high osmotic pressure or a water recovery method.

MEANS FOR SOLVING THE PROBLEMS

In order to solve the above problems, a membrane separation method for a to-be-treated liquid having an osmotic pressure according to one aspect of the present invention is a membrane separation method including a first step of separating the to-be-treated liquid into a first permeate and a first retentate by a reverse osmosis method using a loose RO membrane, in which the to-be-treated liquid satisfies $\pi_{Cb'} > \Delta Pmax$ when an osmotic pressure of a to-be-treated liquid side membrane surface concentration Cb' is represented by $\pi_{Cb'}$ and a maximum operating pressure difference is represented by $\Delta Pmax$, and the loose RO membrane is a membrane through which at least a part of a solute contained in the to-be-treated liquid passes together with a solvent.

In addition, a membrane separation method for a to-be-treated liquid having an osmotic pressure according to one aspect of the present invention is a membrane separation method including a first step of separating the to-be-treated liquid into a first permeate and a first retentate under pressure by a reverse osmosis method using a loose RO membrane, in which the to-be-treated liquid has an osmotic pressure of 5 MPa or more and 100 MPa or less, and the loose RO membrane is a membrane through which at least a part of a solute contained in the to-be-treated liquid passes together with a solvent.

In a method for manufacturing a loose RO membrane according to one aspect of the present invention, an oxidizing agent solution containing an oxidizing agent is brought into contact with an RO membrane.

EFFECT OF THE INVENTION

According to one aspect of the present invention, it is possible to provide a membrane separation method to which a reverse osmosis method can be applied as a method for separating or concentrating a to-be-treated liquid having a high osmotic pressure or a water recovery method.

BRIEF DESCRIPTION OF THE DRAWINGS

Fig. 1 is a schematic diagram schematically illustrating a configuration of a membrane separation system 1 according to an exemplary embodiment of the present invention.
Fig. 2 is an example of a flowchart illustrating a rough flow of a method for manufacturing a loose RO membrane 50 according to an embodiment of the present invention.
Fig. 3 is a schematic diagram schematically illustrating a configuration of a membrane separation system 1A used in Example 1.

MODE FOR CARRYING OUT THE INVENTION

An exemplary embodiment of a membrane separation method according to the present invention will be described in detail below. The embodiment of the present invention is not limited to the following specific examples. In the following embodiments, a membrane separation system is described as a system that separates a to-be-treated liquid into a permeate and a retentate, but it can be easily understood that the membrane separation system can also be used as a concentration system that concentrates a to-be-treated liquid to obtain a permeate and a concentrate. Similarly, it can be easily understood that a separation device included in the membrane separation system can also be used as a concentration device. In addition, it can be easily understood that the membrane separation system can be used as a filtration system that recovers a highly pure solvent from a to-be-treated liquid, and it can be easily understood that the separation device can be used as a filtration device.

[Embodiment]

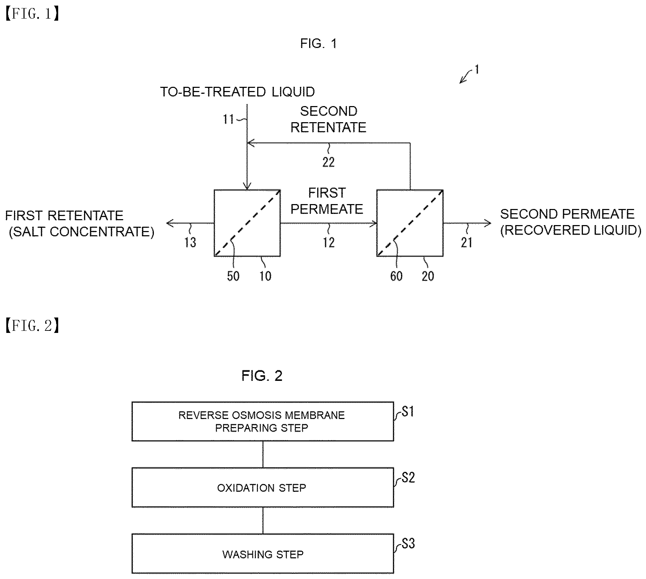

Fig. 1 is a schematic diagram schematically illustrating a configuration of a membrane separation system 1 used in a membrane separation method according to an exemplary embodiment of the present invention. As illustrated in Fig. 1, the membrane separation system 1 includes a first separation device 10 and a second separation device 20.

The first separation device 10 includes a loose RO membrane 50 (loose reverse osmosis membrane), and is a device that separates a to-be-treated liquid into a first permeate and a first retentate by pressurizing a to-be-treated liquid side to which the to-be-treated liquid is supplied to cause the to-be-treated liquid to pass through the loose RO membrane 50. That is, the first separation device 10 is a device that implements a first step of separating the to-be-treated liquid into the first permeate and the first retentate by a reverse osmosis method using the loose RO membrane. The first separation device 10 may be configured by combining a plurality of membrane modules in parallel or in series for a retentate, as represented by a Christmas tree type. The loose RO membrane 50 will be described in detail below.

The second separation device 20 includes a reverse osmosis membrane 60, and is a device that separates the first permeate into a second permeate and a second retentate by pressurizing a to-be-treated liquid side to which the first permeate discharged from the first separation device 10 is supplied as a second to-be-treated liquid to cause the first permeate to pass through the reverse osmosis membrane 60. That is, the second separation device 20 is a device that implements a second step of separating the first permeate into the second permeate and the second retentate by a reverse osmosis method using the reverse osmosis membrane 60. The second separation device 20 may be configured by combining a plurality of membrane modules in parallel or in series for a retentate, as represented by a Christmas tree type. The reverse osmosis membrane 60 will be described in detail below.

In the membrane separation system 1 of Fig. 1, a pipe 11 is connected to a to-be-treated liquid inlet of the first separation device 10. A first permeate outlet of the first separation device 10 and a first permeate inlet of the second separation device 20 are connected to each other with a pipe 12, and a pipe 13 is connected to a first retentate outlet of the first separation device 10. A pipe 21 is connected to a second permeate outlet of the second separation device 20, and a pipe 22 is connected to a second retentate outlet. The pipe 22 may be connected to the pipe 11 or a to-be-treated liquid side of the first separation device 10. The pressure in each pipe may be increased by a pump or the like, and the pressure in a supply pipe of each separation device is desirably increased.

<Permeation phenomenon in membrane separation process>

First, for understanding of the present invention, regarding a permeation phenomenon in a membrane separation process, (i) a blocking ratio and concentration polarization, and (ii) a transport equation of membrane permeation will be described below.

(i) Blocking ratio and concentration polarization

Reverse osmosis membrane performance can be usually expressed by a blocking ratio of a solute and a permeate flux. As the blocking ratio, an apparent blocking ratio Robs [-] defined by the following formula (1) can be generally used.

$$\mathrm{Robs} = 1 - (\mathrm{Cp/Cb}) \qquad (1)$$

In the above formula, Cb represents a concentration of a to-be-treated liquid [mol/m$^3$], and Cp represents a concentration of a permeate [mol/m$^3$].

Meanwhile, it is known that a solute blocked by a membrane accumulates on a membrane surface, and concentration polarization in which the concentration Cb' [mol/m$^3$] on the membrane surface on a to-be-treated liquid side becomes higher than a concentration Cb of the to-be-treated liquid occurs. That is, the membrane actually separates the solution having the concentration Cb', and a true blocking ratio R [-] can be expressed by the following formula (2).

$$\mathrm{R} = 1 - (\mathrm{Cp/Cb'}) \qquad (2)$$

In the above formula, Cp represents a concentration [mol/m$^3$] of a permeate.

In addition, the concentration Cb' on the membrane surface on the to-be-treated liquid side can be determined from a material balance in a boundary membrane using the following formula (3).

$$(\mathrm{Cb'} - \mathrm{Cp})/(\mathrm{Cb} - \mathrm{Cp}) = \exp(\mathrm{Jv/k}) \qquad (3)$$

In the above formula, Jv represents a solvent permeate flux [m$^3$/m$^2$/s], and k represents a solute mass transfer coefficient [m/s] in a boundary membrane on the to-be-treated liquid side.

(ii) Transport equation of membrane permeation

In the membrane separation process, an equation describing a solvent permeate flux and a solute permeate flux passing through a membrane is a transport equation of membrane permeation. The solvent permeate flux Jv and the solute permeate flux Js [m$^3$/m$^2$/s] can be expressed by, for example, the following formulas (4) and (5), respectively.

$$\mathrm{Jv} = \mathrm{Lp}(\Delta \mathrm{P} - \sigma\Delta\pi) \quad (4)$$

$$\mathrm{Js} = \mathrm{P}(\mathrm{Cb'} - \mathrm{Cp}) + (1 - \sigma)\mathrm{CJv} \quad (5)$$

In the above formula, Lp represents a pure water permeability coefficient [m$^3$/m$^2$/s/Pa], $\Delta$P represents an operating pressure difference [Pa] between a to-be-treated liquid side and a permeation side, $\sigma$ represents a reflection coefficient [-], $\Delta\pi$ represents an osmotic pressure difference [Pa] between a to-be-treated liquid side and a permeation side, P represents a permeability coefficient [m/s] of a solute, and C represents an average concentration [mol/m³] on both sides of a membrane. The reflection coefficient σ indicates semipermeability of a membrane, σ = 1 indicates that the membrane is a complete semipermeable membrane, and σ = 0 indicates that there is no semipermeability (no separation occurs).

Δπ can be expressed by the following formula (6).

$$\Delta \Pi = \Pi_{Cb'} - \Pi_{Cp} \qquad (6)$$

In the above formula, $\pi_{Cb}$' represents an osmotic pressure [Pa] of the to-be-treated liquid side membrane surface concentration Cb', and $\pi_{Cp}$ represents an osmotic pressure [Pa] of the permeate concentration Cp.

The above formulas (4) and (5) use a phenomenon equation as a starting point based on thermodynamics of an irreversible process. In the above formula (5), C represents an average concentration on both sides of a membrane. However, when a concentration difference between both sides is very large as in a membrane separation method, the average value has no meaning. Therefore, a transport equation in which formula (5) is applied to the inside of a membrane by a differential system and a membrane thickness is integrated has been proposed. An integration result cannot be expressed in the form of the solute permeate flux Js, but can be expressed by the following formula (7) using a true blocking ratio R.

[Mathematical formula 1]

$$R \equiv \frac{C_b' - C_p}{C_b'} = \frac{\sigma[1 - exp\{-J_v(1-\sigma)/P\}]}{1 - \sigma\, exp\{-J_v(1-\sigma)/P\}} \qquad (7)$$

<To-be-treated liquid>

The membrane separation system 1 according to the present embodiment can be applied to a to-be-treated liquid having a high osmotic pressure, and is preferably applied to a to-be-treated liquid having an osmotic pressure exceeding a maximum operating pressure difference. In other words, the membrane separation system 1 can be preferably applied to a to-be-treated liquid satisfying $\pi_{Cb'}$ > ΔPmax when an osmotic pressure of a to-be-treated liquid side membrane surface concentration Cb' is represented by $\pi_{Cb'}$ and a maximum operating pressure difference is represented by ΔPmax. More specifically, the membrane separation system 1 according to the present embodiment can be preferably applied to a to-be-treated liquid having an osmotic pressure of 5 MPa or more and 100 MPa or less.

<First separation device 10 and loose RO membrane 50>

The first separation device 10 according to the present embodiment includes the loose RO membrane 50.

The loose RO membrane 50 according to the present embodiment is an RO membrane through which at least a part of a solute contained in a to-be-treated liquid passes together with a solvent. In other words, the loose RO membrane 50 has a low apparent blocking ratio Robs as compared with a conventional RO membrane. Specifically, the apparent blocking ratio Robs of the loose RO membrane 50 may be 20% or more and 90% or less under operating conditions of a reverse osmosis membrane treatment using the loose RO membrane 50.

When the apparent blocking ratio Robs under the operating conditions is 20% or more and 90% or less, the permeate concentration Cp is increased, and an osmotic pressure difference between a solution on a to-be-treated liquid side and a solution on a permeation side can be controlled. This makes it possible to perform a reverse osmosis treatment on a to-be-treated liquid having a high osmotic pressure. When the apparent blocking ratio Robs is less than 20%, in a case of application to a concentration process, concentration efficiency is low, the number of stages required to obtain a desired concentration degree increases, and a membrane area increases. When the apparent blocking ratio Robs exceeds 90%, it is difficult to ensure a sufficient osmotic pressure difference between a solution on a to-be-treated liquid side and a solution on a permeation side. Therefore, the apparent blocking ratio Robs of the loose RO membrane 50 in the present embodiment is preferably 20% or more and 90% or less, and more preferably 40% or more and 80% or less.

A target of the blocking ratio is the sum of all solutes having an osmotic pressure in the solution. Meanwhile, a solute that passes through the loose RO membrane 50 according to the present embodiment is not limited to a specific solute.

Note that the apparent blocking ratio Robs can vary depending on operating conditions even for the same membrane. The loose RO membrane 50 according to the present embodiment can also be defined as having an apparent blocking ratio Robs of 20% or more and 90% or less when the to-be-treated liquid of a 25 wt% potassium hydrogen carbonate aqueous solution is subjected to a reverse osmosis method treatment at a liquid temperature of 40°C, an operating pressure difference of 8 MPa, a pH of 7 or more and 9 or less, and a recovery ratio of 10% or more and 20% or less as exemplary operating conditions.

Alternatively, the loose RO membrane 50 according to the present embodiment may be a reverse osmosis membrane in which the permeability coefficient Lp of pure water is $1 \times 10^{-12}$ [$m^3/m^2/s/Pa$] or more and $1 \times 10^{-9}$ [$m^3/m^2/s/Pa$] or less, the reflection coefficient $\sigma$ of a solute is 0.2 or more and 0.9 or less, and the permeability coefficient P of the solute is $1 \times 10^{-8}$ [m/s] or more and $1 \times 10^{-5}$ [m/s] or less.

(Manufacture of loose RO membrane 50)

Such a loose RO membrane 50 can be manufactured using, for example, a conventional reverse osmosis membrane. Fig. 2 is an example of a flowchart illustrating a rough flow of a method for manufacturing the loose RO membrane 50.

As illustrated in Fig. 2, first, a commonly used reverse osmosis membrane is prepared (reverse osmosis membrane preparing step: S1). The reverse osmosis membrane used for manufacturing the loose RO membrane 50 is not particularly limited. The reverse osmosis membrane may be a polyamide-based membrane or a cellulose acetate-based membrane, and an element may be a spiral type or a hollow fiber type, but a membrane having a high usable pressure is preferable, and a membrane having a large pure water permeability coefficient is more preferable.

Next, the reverse osmosis membrane prepared in step S1 is oxidized (oxidation step: S2). For example, the reverse osmosis membrane is brought into contact with an oxidizing agent. As the oxidizing agent, for example, an oxidizing agent dissolved in a solvent such as water may be used. As the oxidizing agent used in the oxidation step S2, an inorganic halogen-based oxidizing agent, an oxygen-based oxidizing agent, an organic compound oxidizing agent, and the like can be used. Among these agents, an oxidizing agent containing chlorine is preferable, and more specifically, a chlorate, a hypochlorite, a chlorite, chlorine dioxide, and the like can be used.

The oxidation step S2 can be performed, for example, by bringing a reverse osmosis membrane into contact with an aqueous solution containing an oxidizing agent at a predetermined concentration for a predetermined time. By bringing the oxidizing agent into contact with the reverse osmosis membrane, a blocking ratio of the reverse osmosis membrane can be reduced, and for example, a loose RO membrane having an apparent blocking ratio Robs of 20% or more and 90% or less can be manufactured.

Furthermore, in the oxidation step S2, a loose RO membrane having a desired blocking ratio can be manufactured by adjusting a contact time between the reverse osmosis membrane and the oxidizing agent. Specifically, when a concentration of the oxidizing agent solution is constant, a loose RO membrane having a lower blocking ratio can be obtained as the contact time between the oxidizing agent solution and the reverse osmosis membrane is longer.

Alternatively, in the oxidation step S2, a loose RO membrane having a desired blocking ratio can be manufactured by adjusting the concentration of the oxidizing agent. Specifically, when the contact time is constant, a loose RO membrane having a lower blocking ratio can be obtained as the concentration of the oxidizing agent solution is higher. Of course, the blocking ratio may be adjusted by adjusting both the oxidizing agent concentration and the contact time.

After the oxidation step S2, the oxidizing agent solution that can be in contact with the reverse osmosis membrane is replaced with pure water or the like to obtain the loose RO membrane 50 (washing step: S3). The oxidizing agent solution used for the contact in a container may be replaced with pure water, or the loose RO membrane may be taken out from the container and washed with pure water or the like.

The above-described method for manufacturing a loose RO membrane using a reverse osmosis membrane can be similarly applied to manufacture of a loose RO membrane element using a reverse osmosis membrane element.

(Multi-stage configuration of first separation device 10)

In the membrane separation system 1 of Fig. 1, an example in which there is one first separation device 10 is illustrated, but the membrane separation system 1 may include a plurality of first separation devices 10 upstream of the second separation device 20. From the theoretical formula, the number of required stages is determined from an osmotic pressure of a to-be-treated liquid, a maximum operating pressure difference, and the like, and more stages are required as the osmotic pressure of the to-be-treated liquid is higher. However, when the number of stages is excessively increased, recompression power or the like increase, and therefore the membrane separation system 1 preferably includes one or more and ten or less first separation devices 10. That is, the membrane separation method may include one or more and ten or less first steps.

When the membrane separation system 1 includes two or more first separation devices 10, the loose RO membrane 50 in at least one of the first separation devices 10 that are continuous preferably has a higher blocking ratio than the loose RO membrane 50 of the first separation device 10 in the upstream. In addition, in order to reduce the required membrane area and the required number of stages, the blocking ratio Robs of the loose RO membrane 50 is preferably higher as it goes downstream. Alternatively, as for a performance parameter of the loose RO membrane 50, the solute permeability coefficient P is preferably lower and the reflection coefficient σ is preferably higher as it goes downstream.

By inclusion of the plurality of first separation devices 10 in the membrane separation system 1, it is possible to treat a to-be-treated liquid having a higher osmotic pressure.

<Second separation device 20 and reverse osmosis membrane 60>

The second separation device 20 according to the present embodiment includes the reverse osmosis membrane 60.

The reverse osmosis membrane 60 used in the present embodiment is generally an RO membrane that can be used for seawater desalination, and is usually a membrane having a pore diameter of 1 nm or less and capable of removing ions or low molecular weight organic substances. For example, the permeability coefficient Lp of pure water for an exemplary reverse osmosis membrane 60 may be $1 \times 10^{-13}$ [m$^3$/m$^2$/s/Pa] or more and $1 \times 10^{-10}$ [m$^3$/m$^2$/s/Pa] or less, the reflection coefficient σ of a solute may be 0.95 or more and 1 or less, and the permeability coefficient P of the solute may be $1 \times 10^{-6}$ [m/s] or less. Alternatively, the apparent blocking ratio Robs of the exemplary reverse osmosis membranes 60 may be 950 or more.

<Membrane separation method and operation of membrane separation system 1 according to present embodiment>

A to-be-treated liquid (first to-be-treated liquid) is sent to a to-be-treated liquid side of the first separation device 10 through the pipe 11. The pressure of the first to-be-treated liquid is increased by a pump or the like, and the first to-be-treated liquid is caused to pass through the loose RO membrane 50 to be separated into a first permeate and a first retentate (a concentrate, a salt concentrate) (first step). The first retentate obtained in the first step is discharged through the pipe 13.

The first permeate is sent as a second to-be-treated liquid to a to-be-treated liquid side of the second separation device 20 through the pipe 12. The pressure of the second to-be-treated liquid is increased by a pump or the like, and the second to-be-treated liquid is caused to pass through the reverse osmosis membrane 60 to be separated into a second permeate and a second retentate (second step). The second permeate obtained in the second step can be recovered through the pipe 21. In order to increase a recovery ratio of a solute (for example, a salt), it is preferable to mix the second retentate obtained in the second step with the first to-be-treated liquid through the pipe 22.

As described above, in the membrane separation method and the membrane separation system 1 according to the present embodiment, the reverse osmosis membrane treatment using the loose RO membrane 50 having a low blocking ratio is performed as the first step. As a result, in the first step, a to-be-treated liquid having a high osmotic pressure can be separated into a permeate and a retentate. More specifically, the first separation device 10 can treat a to-be-treated liquid having an osmotic pressure $\pi_{Cb'}$ higher than the maximum operating pressure difference ΔPmax at a pressure of ΔPmax or less. In the first step, the operating pressure difference ΔP can satisfy a condition of $\Delta P > \sigma \Delta \pi$. Alternatively, the operating pressure difference in at least one first step is, for example, 5 MPa or more and 10 MPa or less.

Note that when the first separation device 10 is a loose RO membrane 50 element, the ΔPmax can be a withstand voltage of the loose RO membrane 50 element.

In the membrane separation method and the membrane separation system 1 according to the present embodiment, the second separation device including the reverse osmosis membrane 60 is disposed after the first separation device 10 including the loose RO membrane, and furthermore, the second retentate is returned to the to-be-treated liquid of the first separation device 10. As a result, it is possible to perform treatment at a high osmotic pressure, and it is possible to simultaneously achieve a high salt recovery ratio and high purity solvent recovery.

According to such a configuration, it is possible to replace a treatment of a to-be-treated liquid having a high osmotic pressure, which has been conventionally treated using an evaporation method which is a large energy-consuming process, with the membrane separation method, and it is possible to contribute to energy saving of the process and achievement of sustainable development goals (SDGs) .

(Summary of embodiment)

•A membrane separation method according to a first aspect of the present invention is a membrane separation method for a to-be-treated liquid having an osmotic pressure, the method including a first step of separating the to-be-treated liquid into a first permeate and a first retentate by a reverse osmosis method using a loose RO membrane, in which the to-be-treated liquid satisfies the following formula (1) when an osmotic pressure of a to-be-treated liquid side membrane surface concentration Cb' is represented by $\pi_{Cb'}$, and a maximum operating pressure difference is represented by ΔPmax,

$$\Pi_{Cb'} > \Delta Pmax \quad (1)$$

, and
the loose RO membrane is a membrane through which at least a part of a solute contained in the to-be-treated liquid passes together with a solvent.

- A membrane separation method according to a second aspect of the present invention is a membrane separation method for a to-be-treated liquid having an osmotic pressure, the method including a first step of separating the to-be-treated liquid into a first permeate and a first retentate under pressure by a reverse osmosis method using a loose RO membrane, in which the to-be-treated liquid has an osmotic pressure of 5 MPa or more and 100 MPa or less, and the loose RO membrane is a membrane through which at least a part of a solute contained in the to-be-treated liquid passes together with a solvent.
- A membrane separation method according to a third aspect of the present invention is the membrane separation method according to the first or second aspect, in which in the first step, an operating pressure difference $\Delta P$ falls within a range satisfying the following formula (2) when an osmotic pressure difference between a to-be-treated liquid side and a permeation side is represented by $\Delta \pi$, and a reflection coefficient of a solute of the loose RO membrane is represented by $\sigma$.

$$\Delta P > \sigma \Delta \Pi \quad (2)$$

- A membrane separation method according to a fourth aspect of the present invention is the membrane separation method according to any one of the first to third aspects, in which an apparent blocking ratio Robs of a solute in the loose RO membrane is 20% or more and 90% or less under operating conditions.
- A membrane separation method according to a fifth aspect of the present invention is the membrane separation method according to the fourth aspect, in which in the first step, the to-be-treated liquid is a 25 wt% potassium hydrogen carbonate aqueous solution, and when the to-be-treated liquid is treated at a liquid temperature of 40°C, an operating pressure difference of 8 MPa, a pH of 7 or more and 9 or less, and a recovery ratio of 10% or more and 20% or less, the apparent blocking ratio Robs of the loose RO membrane is 20% or more and 90% or less.
- A membrane separation method according to a sixth aspect of the present invention is the membrane separation method according to any one of the first to fifth aspects, including a second step of separating the first permeate into a second permeate and a second retentate by a reverse osmosis method using a reverse osmosis membrane, in which the reverse osmosis membrane has an apparent blocking ratio Robs of 95% or more.
- A membrane separation method according to a seventh aspect of the present invention is the membrane separation method according to any one of the first to sixth aspects, in which the number of the first steps is one or more and ten or less.
- A membrane separation method according to an eighth aspect of the present invention is the membrane separation method according to any one of the first to seventh aspects, in which, for at least one of the loose RO membranes, a permeability coefficient Lp of pure water is $1 \times 10^{-12}$ [m$^3$/m$^2$/s/Pa] or more and $1 \times 10^{-9}$ [m$^3$/m$^2$/s/Pa] or less, a reflection coefficient $\sigma$ of a solute is 0.2 or more and 0.9 or less, and a permeability coefficient P of the solute is $1 \times 10^{-8}$ [m/s] or more and $1 \times 10^{-5}$ [m/s] or less.
- A membrane separation method according to a ninth aspect of the present invention is the membrane separation method according to any one of the first to eighth aspects, including a plurality of the first steps, in which the loose RO membrane in at least one of the first steps that are continuous has a higher blocking ratio than the loose RO membrane in the first step in the upstream.
- A membrane separation method according to a tenth aspect of the present invention is the membrane separation method according to any one of the sixth to ninth aspects, in which at least a part of the first retentate liquid and/or the second retentate is used as a part of the first to-be-treated liquid and/or the second to-be-treated liquid.
- A membrane separation method according to an eleventh aspect of the present invention is the membrane separation method according to any one of the first to tenth aspects, in which an operating pressure difference in at least one of the first steps is 5 MPa or more and 10 MPa or less.

A method for manufacturing a loose RO membrane according to a twelfth aspect of the present invention is a manufacturing method, including bringing an oxidizing agent solution containing an oxidizing agent into contact with an RO membrane.

- A method for manufacturing a loose RO membrane according to a thirteenth aspect of the present invention is the manufacturing according to the twelfth aspect, in which the adjusted apparent blocking ratio Robs is 20% or more and 90% or less under operating conditions.
- A membrane separation method according to a fourteenth aspect of the present invention is the membrane separation method according to any one of the first to eleventh aspects, in which a loose RO membrane manufactured by the manufacturing method according to the twelfth or thirteenth aspect is used.

The present invention is not limited to the above-described embodiments, and various modifications can be made within the scope indicated in the claims, and embodiments obtained by appropriately combining technical means disclosed in different embodiments are also included in the technical scope of the present invention.

EXAMPLES

Hereinafter, the present invention will be described in more detail based on Example and Comparative Example, but the present invention is not limited to the following Example.

<Application Example>

A case where a reverse osmosis method is applied to a process of concentrating salt water having a concentration Cw = 25 wt% as a to-be-treated liquid was performed according to Comparative Example and Example 1. A concentration C [mol/m$^3$] of the salt water and an osmotic pressure $\pi_C$ [Pa] at the concentration C are calculated from the following formulas (8) and (9). According to this, the osmotic pressure $\pi_{Cb}$ of the present to-be-treated liquid having the concentration Cw = 25 wt% is 18.5 MPa.

$$C = 0.003286 \times Cw^3 + 0.6091 \times Cw^2 + 99.2 \times Cw \quad (8)$$

$$\pi_C = 0.7345C^2 + 4229.9C \quad (9)$$

(Comparative Example)

In Comparative Example, a reverse osmosis method treatment is attempted using a reverse osmosis membrane having a maximum operating pressure difference $\Delta$Pmax = 8 MPa, a pure water permeability coefficient Lp = 8.90 $\times$ 10$^{-12}$ [m$^3$/m$^2$/s/Pa], a solute permeability coefficient P = 1.00 $\times$ 10$^{-7}$ [m/s], and a reflection coefficient $\sigma$ = 0.999. However, under the present conditions, ($\Delta$P - $\sigma\Delta\pi$) $\approx$ -10.5 < 0 is satisfied, a solvent permeate flux expressed by the formula (4) has a negative value, and therefore a to-be-treated liquid cannot be concentrated in the present reverse osmosis method treatment.

(Example 1)

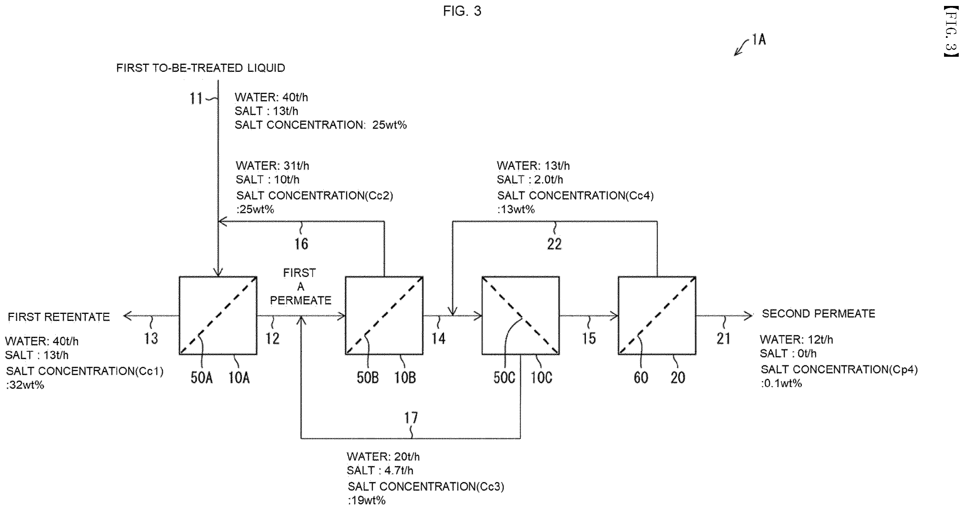

In Example 1, a reverse osmosis method treatment of a to-be-treated liquid is attempted using the membrane separation method according to the present invention. Fig. 3 is a schematic diagram schematically illustrating a configuration of a membrane separation system 1A used in Example 1. The membrane separation system 1A includes three first separation devices 10 (10A, 10B, and 10C) and a second separation device 20.

The first separation device 10A is a device disposed on the most upstream side, and includes a loose RO membrane 50A. The first separation device 10B is a device disposed on a downstream side on a permeation side of the first separation device 10A, and includes a loose RO membrane 50B. The first separation device 10C is a device disposed on a downstream side on a permeation side of the first separation device 10B, and includes a loose RO membrane 50C. The second separation device 20 is a device disposed on a downstream side on a permeation side of the first separation device 10C, and includes a reverse osmosis membrane 60.

As the loose RO membrane 50A and the loose RO membrane 50B, membranes having a maximum operating pressure difference $\Delta$Pmax = 8 MPa, a pure water permeability coefficient Lp = 1.50 $\times$ 10$^{-11}$ [m$^3$/m$^2$/s/Pa], a solute permeability coefficient P = 9.00 $\times$ 10$^{-6}$ [m/s], and a reflection coefficient $\sigma$ = 0.65 were used. As the loose RO membrane 50C, a membrane having a maximum operating pressure difference $\Delta$Pmax = 8 MPa, a pure water permeability coefficient Lp = 1.26 $\times$ 10$^{-11}$ [m$^3$/m$^2$/s/Pa], a solute permeability coefficient P = 7.00 $\times$ 10$^{-6}$ [m/s], and a reflection coefficient $\sigma$ =

0.75 was used.

The reverse osmosis membrane 60 is a membrane having a maximum operating pressure difference $\Delta Pmax$ = 8 MPa, a pure water permeability coefficient Lp = $8.90 \times 10^{-12}$ [m$^3$/m$^2$/s/Pa], a solute permeability coefficient P = $1.00 \times 10^{-7}$ [m/s], and a reflection coefficient $\sigma$ = 0.999 as in Comparative Example.

(Flow of membrane separation operation)

A to-be-treated liquid (first to-be-treated liquid) is sent to a to-be-treated liquid side of the first separation device 10A through a pipe 11. The first to-be-treated liquid is caused to pass through the loose RO membrane 50A to be separated into a first A permeate and a first A retentate (a concentrate) under condition of $\Delta P$ = 8 MPa (first A step). The first A retentate obtained in the first A step is discharged through a pipe 13.

The first A permeate is sent as a first B to-be-treated liquid to a to-be-treated liquid side of the first separation device 10B through a pipe 12. The first B to-be-treated liquid is caused to pass through the loose RO membrane 50B to be separated into a first B permeate and a first B retentate under condition of $\Delta P$ = 8 MPa (first B step). The first B retentate obtained in the first B step is mixed with the first to-be-treated liquid through a pipe 16 as a recycled liquid.

The first B permeate is sent as a first C to-be-treated liquid to a to-be-treated liquid side of the first separation device 10C through a pipe 14. The first C to-be-treated liquid is caused to pass through the loose RO membrane 50C to be separated into a first C permeate and a first C retentate under condition of $\Delta P$ = 8 MPa (first C step). The first C retentate obtained in the first C step is mixed with the first B to-be-treated liquid through a pipe 17 as a recycled liquid.

The first C permeate is sent as a second to-be-treated liquid to a to-be-treated liquid side of the second separation device 20 through a pipe 15. The second to-be-treated liquid is caused to pass through the reverse osmosis membrane 60 to be separated into a second permeate and a second retentate under condition of $\Delta P$ = 8 MPa (second step). The second permeate obtained in the second step is discharged through a pipe 21. The second retentate obtained in the second step is mixed with the first C to-be-treated liquid through a pipe 22 as a recycled liquid.

The pressure of the first to-be-treated liquid, the first B to-be-treated liquid, the first C to-be-treated liquid, and the second to-be-treated liquid was increased using a pump, and an operating pressure difference $\Delta P$ in each of the separation devices was 8 MPa.

(Setting of convergence condition)

A mass transfer coefficient k in a boundary membrane in each of the first separation devices 10A to 10C and the second separation device 20 was $8.00 \times 10^{-5}$ [m/s]. In addition, a material balance in each of the first separation devices 10A to 10C and the second separation device 20 was calculated as follows. That is, using the concentration Cb' [mol/m$^3$] on a to-be-treated liquid side and a permeate concentration Cp [mol/m$^3$] as variables, convergence calculation was performed such that the above formulas (3), (4), and (7) were satisfied for each membrane area of 0.001 m$^2$. In addition, using a necessary membrane area as a variable, a convergence condition was set such that a salt concentration of each recycled liquid was equal to a salt concentration of a to-be-treated liquid at a recycling joint destination.

Detailed numerical values of the material balance set as described above are illustrated in Fig. 3. As illustrated in Fig. 3, by the membrane separation operation using the membrane separation system 1A, the first to-be-treated liquid could be dehydrated by about 30% by an operation of a maximum operating pressure difference or less to obtain a concentrated first retentate, and a salt recovery ratio of 99.9% or more could be achieved. That is, it has been proved that the membrane separation system 1A can perform a reverse osmosis method treatment on a to-be-treated liquid having a high osmotic pressure of 18.5 MPa, which could not be separated in Comparative Example, by an operation of a maximum operating pressure difference or less.

DESCRIPTION OF REFERENCE SIGNS

1, 1A Membrane separation system
10, 10A, 10B, 10C First separation device
20 Second separation device
50, 50A, 50B, 50C Loose RO membrane
60 Reverse osmosis membrane

**Claims**

1. A membrane separation method for a to-be-treated liquid having an osmotic pressure, the method comprising

   a first step of separating the to-be-treated liquid into a first permeate and a first retentate by a reverse osmosis method using a loose RO membrane, wherein
   the loose RO membrane is a membrane through which at least a part of a solute contained in the to-be-treated liquid passes together with a solvent, and
   the to-be-treated liquid

   (i) satisfies the following formula (1) when an osmotic pressure of a to-be-treated liquid side membrane surface concentration Cb' is represented by $\pi_{Cb'}$ and a maximum operating pressure difference is represented by $\Delta Pmax$,

   $$\pi_{Cb'} > \Delta Pmax \quad (1)$$

   , or
   (ii) has an osmotic pressure of 5 MPa or more and 100 MPa or less.

2. The membrane separation method according to claim 1, wherein in the first step, an operating pressure difference $\Delta P$ falls within a range satisfying the following formula (2) when an osmotic pressure difference between a to-be-treated liquid side and a permeation side is represented by $\Delta \pi$, and a reflection coefficient of a solute of the loose RO membrane is represented by $\sigma$.

   $$\Delta P > \sigma \Delta \pi \quad (2)$$

3. The membrane separation method according to claim 1, wherein an apparent blocking ratio Robs of a solute in the loose RO membrane is 20% or more and 90% or less under operating conditions.

4. The membrane separation method according to claim 3, wherein in the first step, the to-be-treated liquid is a 25 wt% potassium hydrogen carbonate aqueous solution, and when the to-be-treated liquid is treated at a liquid temperature of 40°C, an operating pressure difference of 8 MPa, a pH of 7 or more and 9 or less, and a recovery ratio of 10% or more and 20% or less, the apparent blocking ratio Robs of the loose RO membrane is 20% or more and 90% or less.

5. The membrane separation method according to claim 1, comprising a second step of separating the first permeate into a second permeate and a second retentate by a reverse osmosis method using a reverse osmosis membrane, wherein
   the reverse osmosis membrane has an apparent blocking ratio Robs of 95% or more.

6. The membrane separation method according to claim 1, wherein the number of the first steps is one or more and ten or less.

7. The membrane separation method according to claim 1, wherein for at least one of the loose RO membranes, a permeability coefficient Lp of pure water is $1 \times 10^{-12}$ [m$^3$/m$^2$/s/Pa] or more and $1 \times 10^{-9}$ [m$^3$/m$^2$/s/Pa] or less, a reflection coefficient $\sigma$ of a solute is 0.2 or more and 0.9 or less, and a permeability coefficient P of the solute is $1 \times 10^{-8}$ [m/s] or more and $1 \times 10^{-5}$ [m/s] or less.

8. The membrane separation method according to claim 1, comprising a plurality of the first steps, wherein the loose RO membrane in at least one of the first steps that are continuous has a higher blocking ratio than the loose RO membrane in the first step in upstream.

9. The membrane separation method according to claim 5, wherein at least a part of the first retentate and/or the second retentate is used as a part of a first to-be-treated liquid and/or a second to-be-treated liquid.

10. The membrane separation method according to claim 1, wherein an operating pressure difference in at least one of the first steps is 5 MPa or more and 10 MPa or less.

11. A method for manufacturing a loose RO membrane, comprising bringing an oxidizing agent solution containing an oxidizing agent into contact with an RO membrane.

12. The method for manufacturing a loose RO membrane according to claim 11, wherein the adjusted apparent blocking ratio Robs is 20% or more and 90% or less under operating conditions.

13. The membrane separation method according to any one of claims 1 to 10, wherein a loose RO membrane manufactured by the manufacturing method according to claim 11 or 12 is used.

【FIG. 1】

FIG. 1

TO-BE-TREATED LIQUID

SECOND RETENTATE

22

11

FIRST PERMEATE

FIRST RETENTATE (SALT CONCENTRATE)

SECOND PERMEATE (RECOVERED LIQUID)

13    12    21

50  10    60  20

1

【FIG. 2】

FIG. 2

| REVERSE OSMOSIS MEMBRANE PREPARING STEP | S1 |
| OXIDATION STEP | S2 |
| WASHING STEP | S3 |

【FIG. 3】

FIG. 3

FIRST TO-BE-TREATED LIQUID

WATER: 40t/h
SALT : 13t/h
SALT CONCENTRATION: 25wt%

11

WATER: 31t/h
SALT : 10t/h
SALT CONCENTRATION(Cc2) :25wt%

16

FIRST A PERMEATE

12

WATER: 20t/h
SALT : 4.7t/h
SALT CONCENTRATION(Cc3) :19wt%

17

14

WATER: 13t/h
SALT : 2.0t/h
SALT CONCENTRATION(Cc4) :13wt%

22

15

21

SECOND PERMEATE

WATER: 12t/h
SALT : 0t/h
SALT CONCENTRATION(Cp4) :0.1wt%

10A 50A
10B 50B
10C 50C
20 60

13

FIRST RETENTATE

WATER: 40t/h
SALT : 13t/h
SALT CONCENTRATION(Cc1) :32wt%

1A

## INTERNATIONAL SEARCH REPORT

| | International application No. |
| --- | --- |
| | **PCT/JP2022/023031** |

**A. CLASSIFICATION OF SUBJECT MATTER**

***B01D 61/02*** (2006.01)i; ***B01D 61/12*** (2006.01)i; ***B01D 61/58*** (2006.01)i; ***B01D 69/02*** (2006.01)i
FI: B01D61/02 500; B01D61/12; B01D61/58; B01D69/02

According to International Patent Classification (IPC) or to both national classification and IPC

**B. FIELDS SEARCHED**

Minimum documentation searched (classification system followed by classification symbols)

B01D61/02; B01D61/12; B01D61/58; B01D69/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-248429 A (TORAY INDUSTRIES, INC.) 22 September 1997 (1997-09-22) claims, paragraphs [0002], [0004], [0005], [0007]-[0009], [0025]-[0028], [0034]-[0047], fig. 1-6 | 1, 6, 8 |
| Y | | 3, 5, 8-10, 13 |
| A | | 2, 4, 7 |
| Y | JP 2001-269543 A (TORAY INDUSTRIES, INC.) 02 October 2001 (2001-10-02) claims, paragraphs [0002]-[0010], [0029]-[0053], fig. 1-5 | 1, 3, 5-6, 8-10, 13 |
| A | | 2, 4, 7 |
| Y | JP 2001-269544 A (TORAY INDUSTRIES, INC.) 02 October 2001 (2001-10-02) claims, paragraphs [0002]-[0010], [0029]-[0048], fig. 1-3 | 1, 3, 5-6, 8-10, 13 |
| A | | 2, 4, 7 |
| Y | JP 61-200810 A (KURITA WATER INDUSTRIES LTD.) 05 September 1986 (1986-09-05) claims, p. 2, upper left column, line 4 to p. 3, lower right column, line 12, fig. 1 | 1, 3, 5-6, 8-10, 13 |
| A | | 2, 4, 7 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 July 2022** | **09 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/023031**

| C. | DOCUMENTS CONSIDERED TO BE RELEVANT | |
|---|---|---|
| Category* | Citation of document, with indication, where appropriate, of the relevant passages | Relevant to claim No. |
| Y | JP 4-150923 A (KAWASAKI JUKOGYO KABUSHIKI KAISHA) 25 May 1992 (1992-05-25) claims, p. 4, lower left column, line 8, p. 5, upper right column, line 17 | 1, 3, 5-6, 8-10, 13 |
| A | | 2, 4, 7 |
| X | JP 2005-152818 A (TORAY INDUSTRIES, INC.) 16 June 2005 (2005-06-16) claims, paragraphs [0008], [0036], [0056]-[0061] | 11-12 |
| Y | | 3, 13 |
| A | | 2, 4, 7 |
| Y | CN 111807471 A (CHN ENERGY INVESTMENT GROUP CO., LTD.) 23 October 2020 (2020-10-23) claims, paragraphs [0067]-[0079] | 5, 13 |
| A | | 2, 4, 7 |
| Y | JP 2000-93751 A (TORAY INDUSTRIES, INC.) 04 April 2000 (2000-04-04) claims | 10, 13 |
| A | | 2, 4, 7 |
| X | JP 2016-155074 A (ORGANO CORP.) 01 September 2016 (2016-09-01) claims, paragraphs [0002], [0018]-[0115] | 11-12 |
| Y | | 13 |
| A | | 2, 4, 7 |

Form PCT/ISA/210 (second sheet) (January 2015)

**INTERNATIONAL SEARCH REPORT**
Information on patent family members

International application No.

**PCT/JP2022/023031**

| Patent document cited in search report | | | Publication date (day/month/year) | Patent family member(s) | | | Publication date (day/month/year) |
|---|---|---|---|---|---|---|---|
| JP | 9-248429 | A | 22 September 1997 | (Family: none) | | | |
| JP | 2001-269543 | A | 02 October 2001 | JP | 8-206460 | A | |
| | | | | JP | 2001-269544 | A | |
| JP | 2001-269544 | A | 02 October 2001 | JP | 8-206460 | A | |
| | | | | JP | 2001-269543 | A | |
| JP | 61-200810 | A | 05 September 1986 | (Family: none) | | | |
| JP | 4-150923 | A | 25 May 1992 | US | 5238574 | A | |
| | | | | claims, column 12, line 56 to column 14, line 43 | | | |
| | | | | EP | 463605 | A1 | |
| JP | 2005-152818 | A | 16 June 2005 | (Family: none) | | | |
| CN | 111807471 | A | 23 October 2020 | (Family: none) | | | |
| JP | 2000-93751 | A | 04 April 2000 | (Family: none) | | | |
| JP | 2016-155074 | A | 01 September 2016 | WO | 2016/136304 | A1 | |
| | | | | KR | 10-2017-0102351 | A | |
| | | | | CN | 107635652 | A | |

Form PCT/ISA/210 (patent family annex) (January 2015)

**REFERENCES CITED IN THE DESCRIPTION**

**Patent documents cited in the description**

- JP 2018001111 A